# DEMANDE DE BREVET EUROPEEN

(11) **EP 0 844 476 A1**
(43) Date de publication de la demande: **27.05.1998**
(21) Numéro de dépôt: 97402743.5
(22) Date de dépôt: 17.11.1997
(51) Int. Cl.: G01N 21/78, G01N 21/77, H01B 3/18

(54) **Dispositif de détection de produits gazeux dans un matériau isolant organique**

(30) Priorité: 21.11.1996 FR 9614207
(71) Demandeur: ALCATEL ALSTHOM COMPAGNIE GENERALE D'ELECTRICITE, 75008 Paris (FR)
(72) Inventeur: Tardy, André, 91520 Egly (FR); Foulon, Nadine, 75015 Paris (FR); Barraud, Jean-Yves, 75015 Paris (FR)
(74) Mandataire: Scheer, Luc

(57) **Abrégé**

L'invention concerne un dispositif de détection de produits gazeux oxydants et/ou acides dans un matériau isolant organique d'une machine électrique (1), soumis à un champ électrique E, ledit isolant comprenant des défauts (3) sous forme d'espaces ou failles remplis d'un gaz, selon l'invention le dispositif comprend une fibre optique (4) ayant des propriétés optiques modifiables par une attaque chimique (10) desdits produits gazeux oxydants et/ou acides, noyée dans l'isolant organique (2), et
un générateur (5) et un récepteur/comparateur (6) d'onde connectés à la fibre optique (4) pour détecter les modifications (11) des caractéristiques d'une onde émise (9) par le générateur (5) et transportée par la fibre optique (4).

## Description

Les décharges partielles se produisent notamment dans ies équipements utilisés dans les installations à haute tension des réseaux de transport ou de distribution d'énergie électrique. Une décharge partielle est un phénomène de rupture diélectrique se produisant dans une partie seulement de l'isolant séparant deux conducteurs sans que cela entraîne le claquage complet des composants concernés.

La détection d'une décharge partielle peut fournir des indications sur le vieillissement de certains composants. De ce fait cette détection peut améliorer sensiblement les moyens de maintenance prédictive notamment dans les installations électriques à haute tension. En particulier, la détection de décharges partielles permet de changer des composants de la machine électrique avant que le claquage complet n'intervienne. Un tel claquage peut, outre détruire le composant, endommager sérieusement l'ensemble de la machine électrique. Le terme "machine électrique" sera pris au sens large incluant notamment les câbles d'énergie isolés, les transformateurs, les alternateurs, les générateurs, et plus généralement tout dispositif électrique mettant en jeu un isolant électrique inaccessible nécessitant une maintenance lourde.

On connaît divers moyens pour détecter des décharges partielles :
il y a les moyens électriques reposant sur la mesure, en divers points de la machine électrique, des conséquences de l'impulsion de tension résultant de la décharge partielles;
il y a les moyens optiques reposant sur le captage, par une fibre optique de la lumière émise par la décharge partielle, ou sur la modification des caractéristiques optique d'une fibre optique soumise à l'onde de pression acoustique résultant du craquement sonore d'une décharge partielle.

Toutes ces méthodes ont pour but de détecter la présence des décharges partielles et d'essayer de corréler les décharges partielles avec un état de vieillissement de la machine électrique.

L'existence des décharges partielles dans un matériau isolant peut être déjà la manifestation de la détérioration des caractéristiques isolantes du dit matériau. En outre, ces décharges partielles accélèrent sensiblement le processus de détérioration des caractéristiques isolantes du matériau.

Toutes les machines électriques ne sont pas égales devant les décharges partielles :

Dans le cas des machines tournantes, les décharges partielles sont toujours présentes lors de leur fonctionnement et pourtant ces machines ont une vie de l'ordre de 20 ans.

Au contraire, dans les câbles d'énergie, l'apparition des décharges partielles est synonyme de destruction imminente.

On connaît le mécanisme qui précède l'apparition des décharges partielles dans un matériau isolant solide.

Inévitablement, le matériau isolant solide comprend des défauts issus, soit de la fabrication, soit des contraintes thermiques et/ou mécaniques subies lors de sa mise en place dans la machine électrique, soit lors de la mise en oeuvre de la machine électrique.

Ces défauts sont généralement des espaces ou failles remplis par un gaz comme de l'air plus ou moins humide.

C'est au sein de ces espaces ou failles que vont se développer les décharges partielles.

Lors du fonctionnement de la machine électrique, et avant que les décharges partielles n'apparaissent, le gaz contenu dans les espaces, est soumis à un champ électrique qui crée des décharges couronnes. De ce fait il est modifié chimiquement par activation de ses molécules sous le champ électrique.

Les produits gazeux résultant de cette modification sont fortement oxydants et/ou acides.

Dans le cas d'un isolant solide les parois organiques des espaces ou failles, au contact des produits gazeux oxydants et/ou acides, sont sensiblement détériorées par hydropéroxydation puis oxydation. Les propriétés intrinsèques du matériau isolant sont aicrs sensiblement dégradées.

En outre, l'isolant peut être plus ou moins poreux. De ce fait, il y a une diffusion possible des produits gazeux dans ia périphérie des espaces ou failles et donc une dégradation dans l'épaisseur des parois des espaces ou failles.

La concentration de ces produits gazeux augmente sensiblement avec l'apparition des décharges partielles jusqu'à transformation totale du gaz d'origine en produit gazeux. Cela entraîne bien évidemment une augmentation de la dégradation et conduit à terme à la rupture diélectrique complète.

Dans le cas de des transformateurs à isolant huile, il a été montré qu'il existe une relation inéaire entre L'activité des décharges partielles et la production de d'hydrogène H₂ dans l'huile du transformateur. Les décharges partielles peuvent être initiées par une protubérance sur la cuve du transformateur, par une particule flottante, ou par des fils guipés.

Le but de la présente invention est de proposer un capteur basé sur un principe totalement différent de l'art antérieur en ce qu'il ne s'appuie pas sur les manifestations électrique, lumineuse, ou sonore des décharges partielles mais sur la détection des modifications chimiques intervenant au sein de l'isolant lors de son vieillissement et cela, selon la sensibilité du capteur, préalablement au déclenchement des décharges partielles.

A cet effet l'invention concerne un dispositif de détection de produits gazeux dans un matériau isolant organique d'une machine électrique, soumis à un champ électrique E. Selon l'invention, le dispositif comprend une fibre optique ayant des propriétés optiques modifiables par une attaque chimique desdits produits gazeux, et

un générateur et un récepteur/comparateur d'onde connectés à la fibre optique pour détecter les modifications des caractéristiques d'une onde émise par le générateur et transportée par la fibre optique.

Dans une première forme d'application, par exemple les transformateurs à huile, l'isolant, soumis au champ électrique, produit de l'hydrogène H₂. Le dispositif de détection comprend donc une fibre optique ayant des propriétés optiques modifiables par une attaque chimique par l'hydrogène H₂, noyée dans l'isolant organique (de l'huile par exemple).

Dans une deuxième forme d'application, l'isolant, soumis au champ électrique, est solide et comprend des défauts sous forme d'espaces ou failles remplis d'un gaz se transformant chimiquement en produits gazeux oxydants et/ou acides. Le dispositif comprend alors une fibre optique ayant des propriétés optiques modifiables par une attaque chimique desdits produits gazeux oxydants et/ou acides, noyée dans l'isolant organique.

La fibre optique est sensible aux attaques chimiques de l'un ou de plusieurs des produits gazeux suivant : O₃, H₂O₂, NOₓ, SOₓ, les acides nitreux/nitriques, les composés volatiles organiques de type acide oxalique, acide acétique ou équivalent.

Selon un mode de réalisation de l'invention, la fibre optique est en un matériau plus sensible aux attaques chimiques par les produits gazeux oxydants et/ou acides que le matériau isolant organique.

Dans un mode de réalisation de l'invention, la fibre optique est une fibre optique à coeur de silice continûment sensible aux produits gazeux comprenant un revêtement polymère d'indice inférieur à 1,46.

Le coeur de la fibre optique peut être décentré.

Le revêtement polymère peut être un polymère photoréticulable à base de polydiène, ou chimiquement sensible aux produits gazeux.

Dans une variante, le revêtement polymère peut être un polymère poreux, dont les pores comprennent un réactif aux produits gazeux, lesdits pores ayant un diamètre suffisant pour laisser pénétrer au moins un des produits gazeux tout en retenant le réactif.

Dans un autre mode de réalisation, la fibre optique est une fibre optique plastique de type polyméthylméthacrylate (PMMA) ayant une gaine optique comprenant un indicateur coloré dont la couleur change lors de l'attaque chimique des produits gazeux.

L'indicateur coloré peut être par exemple du tétraméthylpipéridine oxydé (TEMPOL) introduit dans le PMMA.

L'un des avantages de la présente invention est de pouvoir déterminer le vieillissement du matériau isolant avant l'apparition des décharges partielles. Cela est important dans certains domaines comme, par exemple, la maintenance prédictive dans les câbles d'énergie à isolation solide, où, les décharges partielles sont un signe de destruction quasi-immediate.

Un autre avantage est l'insensibilité de la fibre optique aux perturbations électromagnétiques, et sa sécurité d'utilisation dans des environnements hostiles.

Un autre avantage résulte du prix modique des fibres optiques, matériaux polymères et réactifs chimiques.

D'autres avantages et caractéristiques de la présente invention résulteront de la description qui va suivre en référence aux dessins annexés dans lesquels :

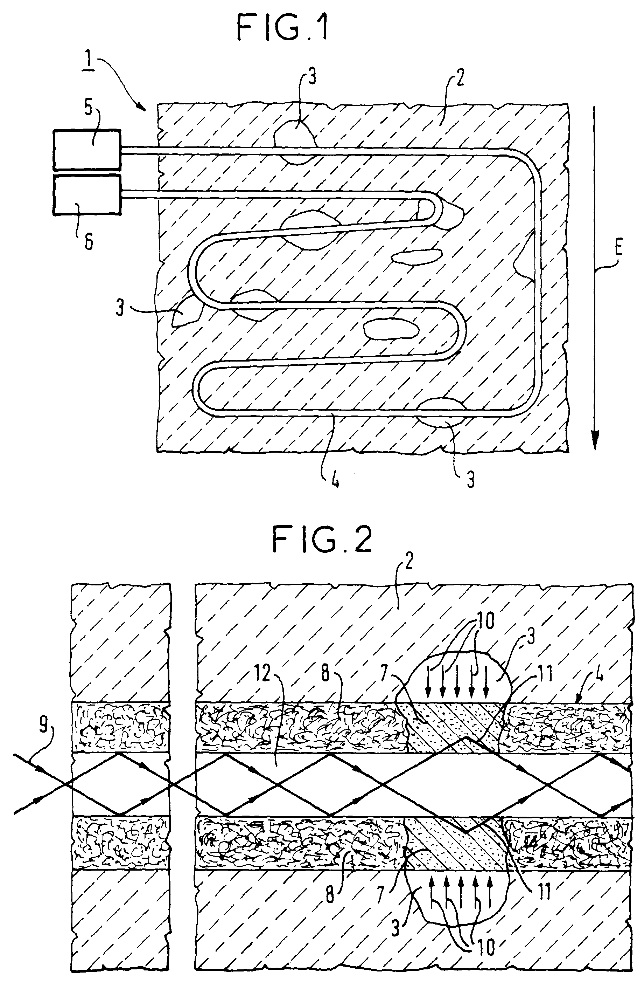

- la figure 1 est une représentation schématique d'un dispositif selon l'invention.
- la figure 2 est une représentation schématique d'un détail de la figure 1 illustrant un des modes de fonctionnement du dispositif selon l'invention.

Dans une première application aux machines électriques avec isolant organique liquide de type huile, l'isolant, soumis au champ électrique, produit de l'hydrogène H₂. le dispositif de détection comprend alors une fibre optique ayant des propriétés optiques modifiables par une attaque chimique par l'hydrogène H₂, noyée dans l'isolant organique.

Dans une deuxième application à une machine électrique 1 à isolant organique solide 2, le dispositif selon l'invention permet de détecter des produits gazeux oxydants et/ou acides dans le matériau isolant organique 2 de la machine électrique soumis à un champ électrique E.

L'isolant comprenant des défauts 3 sous forme d'espaces ou failles 3 remplis d'un gaz.

Comme indiqué dans le préambule de la description, les produits gazeux sont issus de l'ionisation du gaz contenu dans les espaces ou failles 3 du matériau organique isolant 2.

Le dispositif selon l'invention comprend une fibre optique 4 ayant des propriétés optiques modifiables par une attaque chimique 10 des produits gazeux oxydants et/ou acides, noyée dans l'isolant organique 2, et

Un générateur 5 et un récepteur/comparateur 6 d'onde connectés à la fibre optique 4 pour détecter les modifications 11 des caractéristiques d'une onde 9 émise par le générateur 5 et transportée par la fibre optique 4.

On entend par "modifiables" le fait que l'attaque chimique 10 de la fibre optique 4 par les produits gazeux, modifie physiquement et/ou chimiquement l'aspect de la fibre optique 4 à l'endroit 7 où elle est attaquée, et ces modifications chimiques ou physiques induisent des modifications dans les propriétés optiques de la fibre optique.

On citera par exemples non limitatifs, le changement de couleur et/ou d'indice de la partie 7 de fibre optique 4 attaquée, l'augmentation ou la diminution de volume de la partie de fibre optique attaquée, etc...

La fibre optique 4 est naturellement choisie de telle manière qu'elle soit sensible aux produits gazeux pouvant être générés par le gaz contenu dans les espaces ou failles.

A titre d'exemple illustratif, mais sans que cela soit limitatif, le gaz contenu dans les espaces ou failles 3 peut être de l'air plus ou moins humide.

Dans le cas d'air sec, les produits gazeux résultant de l'ionisation de l'air sec sont principalement, l'ozone O₃ ; les oxydes d'azote ou de soufre NOₓ, SOₓ ;et des composés organiques volatiles VOC du type acide oxalique, acide acétique ou équivalents.

Dans le cas d'air humide, les produits gazeux résultant de l'ionisation de l'air humide sont principalement les acides nitreux/nitriques et le peroxyde d'hydrogène H₂O₂.

La fibre optique 4 choisie sera donc sensible aux attaques chimiques de l'un ou de plusieurs des produits gazeux suivants : O₃ , H₂O₂, NOₓ, SOₓ, les acides nitreux/nitriques, les composés volatiles organiques de type acide oxalique, acide acétique ou équivalent.

Avantageusement, dans le but d'éviter au maximum la dégradation des propriétés isolantes du matériau isolant organique 2, on choisira une fibre optique 4 dans un matériau plus sensible aux attaques chimiques 10 par les produits gazeux oxydants et/ou acides que le matériau isolant organique 2.

Dans un mode de réalisation de l'invention, la fibre optique 4 est une fibre optique à coeur 12 de silice comprenant un revêtement polymère 8 d'indice inférieur à 1,46 continûment sensible aux produits gazeux. La valeur de 1,46 a été fixée pour que l'onde lumineuse 9 envoyée dans la fibre 4 reste confinée dans celle-ci.

Le coeur 12 de la fibre optique peut être décentré.

Le revêtement polymère 8 peut être un polymère photoréticulable à base de polydiène. Dans ce cas, les produits gazeux cités précédemment coupent et/ou modifient les liaisons chimiques du polymère. On pourra prendre, par exemple, du polyuréthanne acrylate à base de polybucadiène époxydé ou non.

Dans une variante, le revêtement polymère 8 peut être un polymère poreux, dont les pores comprennent un réactif aux produits gazeux, lesdits pores ayant un diamètre suffisant pour laisser pénétrer au moins un des produits gazeux tout en retenant le réactif. C'est alors la réaction d'au moins un des produits gazeux avec le réactif qui modifiera sensiblement les propriétés optiques de la fibre optique.

Dans un autre mode de réalisation, la fibre optique 4 est une fibre optique plastique de type polyméthylméthacrylate (PMMA) ayant une gaine optique 8 comprenant un indicateur coloré dont la couleur change lors de l'attaque chimique par produits gazeux.

L'indicateur coloré peut être, par exemple, du tétraméthylpipéridine oxydé (TEMPOL) introduit dans le PMMA.

Le fonctionnement du dispositif est le suivant :

la fibre optique 4 est intégrée dans le matériau organique isolant 2 au cours de la fabrication du matériau ou de son implantation dans la machine électrique.

La fibre 4 est connectée au générateur d'onde 5 et au récepteur/comparateur 6 selon tous les moyens connus. On citera par exemple la connexion du générateur 5 à l'une des extrémités de la fibre 4 et du récepteur/comparateur 6 à l'autre extrémité de la fibre, ou bien le générateur et le récepteur/comparateur sont connectés à la même extrémité de la fibre, l'autre extrémité pouvant comporter un moyen réfléchissant pour renvoyer l'onde émise (l'air peut suffir à la réflexion de l'onde).

On envoie alors dans la fibre 4 une onde 9 générée par le générateur d'onde 5. L'onde 9 est soit envoyée en continue, soit périodiquement, par exemple lors des périodes de maintenance de la machine électrique.

Lors de la mise en service de la machine électrique, et selon les explications développées dans le préambule de la description, il se forme des produits gazeux oxydants et/ou acides dans les espaces ou failles 3 du matériau isolant organique 2.

L'attaque chimique 10 des produits gazeux sur la fibre optique 4 génère des modifications des propriétés optiques de la partie 7 de la fibre qui est attaquée, et donc des modifications 11 des caractéristiques optiques de l'onde 9 émise, transmise par la fibre.

Ces modifications des caractéristiques optiques peuvent être par exemple un changement de trajectoire 11 du fait d'un changement d'indice de réfraction de la partie 7 de fibre attaquée, ou encore une modification de la polarisation du fait d'une pression générée par une variation du volume de la fibre etc...

Le récepteur/comparateur 6 identifiant des différences entre l'onde 9 émise et l'onde reçue donne un message d'alerte par tout moyen connu.

Le personnel de maintenance peut alors intervenir préalablement à l'apparition de décharges partielles prolongeant ainsi la durée de vie de la machine électrique.

Bien entendu, l'invention n'est pas limitée au mode de mise en oeuvre ou de réalisation décrit et représenté, mais elle est susceptible de nombreuses variantes accessibles à l'homme du métier sans que l'on s'écarte de l'invention. En particulier, le nombre de dispositifs peut être doublé ou triplé par sécurité sans sortir du cadre de l'invention. De même la position de la fibre dans le matériau isolant organique peut varier sans sortir du cadre de l'invention.

## Revendications

1. Dispositif de détection de produits gazeux dans un matériau isolant organique d'une machine électrique (1), soumis à un champ électrique E, caractérisé en ce qu'il comprend une fibre optique (4) ayant des propriétés optiques modifiables par une attaque chimique (10) desdits produits gazeux, et
un générateur (5) et un récepteur/comparateur (6) d'onde connectés à la fibre optique (4) pour détecter les modifications (11) des caractéristiques d'une onde émise (9) par le générateur (5) et transportée par la fibre optique (4).

2. Dispositif de détection selon la revendication 1, ledit isolant, soumis au champ électrique, produisant de l'hydrogène H₂ caractérisé en ce qu'il comprend une fibre optique (4) ayant des propriétés optiques modifiables par une attaque chimique (10) par l'hydrogène H₂, noyée dans l'isolant organique (2).

3. Dispositif de détection selon la revendication 1, ledit isolant, soumis au champ électrique, comprenant des défauts (3) sous forme d'espaces ou failles remplis d'un gaz se transformant chimiquement en produits gazeux oxydants et/ou acides, caractérisé en ce qu'il comprend une fibre optique (4) ayant des propriétés optiques modifiables par une attaque chimique (10) desdits produits gazeux oxydants et/ou acides, noyée dans l'isolant organique (2).

4. Dispositif selon la revendication 3 caractérisé en ce que la fibre optique (4) est sensible aux attaques chimiques (10) de l'un ou de plusieurs des produits gazeux suivants : O₃, H₂O₂, NOₓ, SOₓ, les acides nitreux/nitriques, les composés volatiles organiques de type acide oxalique, ou acide acétique.

5. Dispositif selon la revendication 3 ou 4 caractérisé en ce que la fibre optique (4) est en un matériau plus sensible aux attaques chimiques (10) par les produits gazeux oxydants et/ou acides que le matériau isolant organique (2).

6. Dispositif selon l'une quelconque des revendications 3 à 5 caractérisé en ce que la fibre optique (4) est une fibre optique à coeur de silice (12) comprenant un revêtement polymère (8) d'indice inférieur à 1,46, continûment sensible aux produits gazeux.

7. Dispositif selon la revendication 6 caractérisé en ce que le coeur (12) de la fibre optique est décentré.

8. Dispositif selon la revendication 6 ou 7 caractérisé en ce que le revêtement polymère (8) est un polymère photoréticulable à base de polydiène, ou chimiquement sensible aux produits gazeux.

9. Dispositif selon la revendication 6 caractérisé en ce que le revêtement polymère (8) est un polymère poreux, les pores comprenant un réactif aux produits gazeux, lesdits pores ayant un diamètre suffisant pour laisser pénétrer au moins un des produits gazeux réagissant avec le réactif tout en retenant le réactif.

10. Dispositif selon l'une quelconque des revendications 3 à 5 caractérisé en ce que la fibre optique (4) est une fibre optique plastique de type polyméthylméthacrylate (PMMA) ayant une gaine optique (8) comprenant un indicateur coloré dont la couleur change lors de l'attaque chimique (10) des produits gazeux.

11. Dispositif selon la revendication 10 caractérisé en ce que l'indicateur coloré peut être par exemple du tétraméthylpipéridine oxydé (TEMPOL) introduit dans le PMMA.
